# EUROPÄISCHE PATENTSCHRIFT

(11) **EP 4 201 621 B1**
(45) Veröffentlichungstag und Bekanntmachung des Hinweises auf die Patenterteilung: **30.07.2025**
(21) Anmeldenummer: 22215654.9
(22) Anmeldetag: 21.12.2022
(51) Int. Cl.: B28B 7/08, B28B 17/00, B29C 33/30, G01B 21/22

(54) **ERSTELLEN EINER VERSCHALUNG**
CONSTRUCTION OF FORMWORK
CONSTRUCTION D'UN COFFRAGE

(30) Priorität: 21.12.2021 EP 21216663
(43) Veröffentlichungstag der Anmeldung: 28.06.2023
(73) Patentinhaber: Schöck Bauteile GmbH, 76534 Baden-Baden (DE)
(72) Erfinder:
(74) Vertreter: Hoffmann Eitle

(56) Entgegenhaltungen:
- EP-A1- 2 950 044
- CN-U- 204 894 524
- CN-U- 204 935 887
- CN-U- 214 981 838

## Beschreibung

Die Erfindung betrifft ein Verfahren zum Erstellen einer Verschalung für ein Betonfertigbauteil und ein System zur Erstellung einer Verschalung für ein Betonfertigbauteil.

Es ist bekannt, Betonfertigbauteile oder Bauabschnitte mittels einer Anordnung einer Schalung mit einer Bewehrung in der Schalung und einem Verfüllen der Schalung zumindest teilweise mit Beton herzustellen. Die Schalung wird als "Gussform" verwendet und nach dem Entschalen steht das Betonfertigbauteil zur Verfügung und kann zu einer Baustelle transportiert und dort eingesetzt bzw. verbaut werden.

Es hat sich gezeigt, dass es in der Praxis häufig zu Fehlern bzw. Abweichungen bei der Herstellung von Betonfertigbauteilen kommen kann, die zu einem Ausschuss führen können.

CN 214 981 838 U offenbart ein Verfahren zum Erstellen einer Verschalung für ein Betonfertigbauteil in einer Verschalungsumgebung mit einem Bodenverschalungselement, wobei zwei Libelle, die zueinander rechtwinklig angeordnet sind, zum Ermitteln einer Winkellage des Bodenverschalungselements in einer ersten und zweiten Richtung bezogen auf eine Ebene im Wesentlichen quer zur Richtung der Erdbeschleunigung verwendet werden.

Aufgabe der Erfindung ist es, ein verbessertes Verfahren und ein verbessertes System zu schaffen, bei dem insbesondere die Maßhaltigkeit der Orientierung der äußeren Flächen des Betonfertigbauteils zueinander und/oder die Orientierung von einzelnen äußeren Flächen des Betonfertigbauteils zu einer Anbindungskomponente, beispielsweise einem Wärmedämmelement, einem Trittschalldämmelement, einem thermisch trennenden Befestigungselement, einem Schub- und Schwerlastdorn, einer Transportankerhülse, einer Ankerschiene, einer Gitterhülse und einer Durchstanzbewehrung, möglich ist. Insbesondere kann die Neigung mindestens einer oder mehrerer der Großflächen des Betonfertigbauteils zur Richtung quer zur Erdbeschleunigung optimiert werden.

Die Aufgabe wird gemäß den Gegenständen der unabhängigen Ansprüche gelöst. Bevorzugte Ausführungsformen ergeben sich aus der Beschreibung und den abhängigen Ansprüchen.

Kerngedanke der vorliegenden Erfindung ist es, eine Hilfestellung für eine korrekte Positionierung der Verschalung anzugeben, wobei auf ein Bodenverschalungselement abgestellt wird, welches dann als Bezugspunkt für weitere Verschalungselemente verwendet werden kann. Es wird eine Winkellage des Bodenverschalungselements in mindestens einer ersten Richtung ermittelt. Die Winkellage in der ersten Richtung wird eine Abweichung von der Ebene im Wesentlichen quer zur Richtung der Erdbeschleunigung angeben und festgestellt. Obwohl das Betonfertigbauteil erst auf der Baustelle mit einem anderen Bauteil zusammengefügt bzw. verbunden wird, kann durch eine Berücksichtigung der Neigung des Bodenverschalungselements schon eine Referenzierung geschaffen werden, mittels derer die Fläche des Betonfertigbauteils, die dem Bodenverschalungselement zugewandt ist und/oder die Fläche des Betonfertigbauteils, die der Fläche, die dem Bodenverschalungselement zugewandt ist, gegenüberliegt, in seiner Neigung in mindestens der ersten Richtung ausgerichtet werden kann. Die korrekte Ausrichtung kann beim Einbau auf der Baustelle bzw. beim Verbinden des Betonfertigbauteils mit einer Komponente auf der Baustelle schon als eingestellt berücksichtigt werden, so dass der Einbau vereinfacht und der Aufwand verringert werden kann.

Die Erfindung schafft ein Verfahren zum Erstellen einer Verschalung für ein Betonfertigbauteil in einer Verschalungsumgebung mit einem Bodenverschalungselement nach Anspruch 1.

Der Begriff "Verschalung" umfasst im Sinne der Beschreibung eine aus Komponenten erstellte bzw. zu erstellende Gussform, in die der Beton zur Herstellung des Betonfertigbauteils eingebracht wird. Die Verschalung bzw. Gussform besteht in der Regel aus einzelnen Schalungselementen, wie beispielsweise einem Bodenverschalungselement. Es können mehrere Bodenverschalungselemente, die nebeneinander, insbesondere in einer Ebene, angeordnet sein können, vorgesehen sein. Die Anordnung der Schalungselemente zueinander ergibt die Gussform. Die Schalungselemente können aus Holz, Kunststoff oder Metall sowie aus einer Kombination der genannten Materialien bestehen. In der Verschalung kann eine Bewehrung vor dem Befüllen mit Beton angeordnet werden, die das fertige Betonfertigbauteil verstärken kann.

Der Begriff "Bewehrung" umfasst im Sinne der Beschreibung ein auch Armierung genanntes Gebilde, welches üblicherweise aus Baustahl, Bewehrungsstahl, Betonstahl, Glasfasern, Carbonfasern, Aramid und/oder einer Kombination der genannten Materialien hergestellt sein kann. Die Bewehrung kann einzelne miteinander verbundene Elemente bzw. Komponenten aufweisen.

Im Sinne der Beschreibung umfasst der Begriff "Betonfertigbauteil" ein Fertigbauteil zur Verwendung auf einer Baustelle. Das Betonfertigbauteil kann eine aus dem Beton herausgeführte Bewehrung aufweisen, die dazu dienen kann, das Betonfertigbauteil auf der Baustelle mit einem anderen Element oder einer Komponente zu verbinden. Beispielsweise kann die aus dem Betonfertigbauteil geführte Bewehrung so in bzw. an eine(r) Bewehrung eines anderen Elements angeordnet werden und dieser Bereich mit Beton verfüllt werden.

Das Betonfertigbauteil kann zwei Großflächen aufweisen, die im Wesentlichen parallel zueinander verlaufen können und die mittels umlaufender Seitenflächen miteinander verbunden sein können.

Der Begriff "Verschalungsumgebung" umfasst im Sinne der Beschreibung den Bereich der Fertigung, die für das Betonfertigbauteil vorgesehen ist. Der Bereich kann innerhalb einer Fabrikhalle, einem Betonfertigbauteilwerk oder dergleichen vorliegen. Der Begriff Verschalungsumgebung kann dabei den näheren Bereich, der für die Fertigung des Betonfertigbauteils vorgesehen ist, umfassen, so dass insbesondere die gesamte Verschalung als auch ein Randbereich, der sich an die seitliche Verschalung außen anschließt, als Verschalungsumgebung angesehen werden kann.

Der Begriff "Vorrichtung zum Erfassen der Verschalungsumgebung" umfasst eine Vorrichtung, die mindestens einen Sensor aufweist, mit dem die Verschalungsumgebung erfasst werden kann. Bei dem Sensor kann es sich im Sinne der Beschreibung um jedwedes technische Bauteil handeln, mit dem die Verschalungsumgebung erfasst werden kann. Insbesondere kann es sich bei dem Sensor um ein technisches Bauteil handeln, mit dem die Lage des Bodenverschalungselements im Raum bezogen auf die Vorrichtung zum Erfassen der Verschalungsumgebung bestimmt werden kann. Nach der Erfindung handelt es sich bei dem Sensor um einen optischen Sensor. Nach einem nicht beanspruchten Aspekt kann es sich bei dem Sensor um einen akustischen Sensor (Schallsensor), einen mechanischen/taktilen Sensor und/oder einen induktiven Sensor handeln. Es kann auch mehr als ein Sensor oder mehr als eine Sensorart vorgesehen sein. Sofern mehr als ein Sensor vorgesehen ist, können die Sensoren unterschiedlicher oder gleicher Art sein. Bevorzugt kann ein Sensor eine Kombination der vorgenannten Ausgestaltungen der Sensoren sein, wobei eine Ausgestaltung mit zwei oder mehr Arten von Sensoren bevorzugt sein kann. Mittels unterschiedlicher Sensoren und/oder einer Kombination von Sensorarten in einem Sensor können unterschiedliche Ausgestaltungen von Verschalung und/oder Bodenverschalungselement erfasst werden.

Bei dem Sensor handelt ea sichum einen optischen Sensor. Es ist daher möglich, dass die Vorrichtung zum Erfassen der Verschalungsumgebung das Bodenverschalungselement bzw. die Verschalungsumgebung optisch erfasst. Es kann sein, dass der Sensor das Bodenverschalungselement bzw. die Verschalungsumgebung optisch abtastet. Die Abtastung kann nach einem Muster, beispielsweise zeilen- und/oder spaltenweise, nach dem Prinzip einer Laufzeitvermessung erfolgen. Es kann zusätzlich oder alternativ vorgesehen sein, dass eine optische Abtastung des Bodenverschalungselements bzw. der Verschalungsumgebung durch eine Projektion eines Musters auf die Verschalungsumgebung erfolgt bzw. diese unterstützt. Es kann ein vorbestimmtes Muster auf das Bodenverschalungselement bzw. die Verschalungsumgebung projiziert werden, wobei die Projektion des Musters erfasst werden kann. Aus den Abweichungen zwischen dem vorbestimmten Muster und der Projektion kann die Lage des Bodenverschalungselements bzw. die Lage der Verschalungsumgebung ermittelt werden. Beispielsweise kann eine Neigung, eine Wölbung, ein Abstand und ähnliches aus der Abweichung bezogen auf die Lage bzw. Neigung der Vorrichtung ermittelt werden.

Im Sinne der Beschreibung umfasst der Begriff "mittels der Vorrichtung zum Erfassen der Verschalungsumgebung" im Zusammenhang mit der Ermittlung einer Winkellage sowohl die Ausgestaltung, dass die Vorrichtung die Winkellage ermittelt, als auch, dass die Vorrichtung die Daten bzw. die Information für eine Ermittlung der Winkellage weitergibt. Es kann vorgesehen sein, dass die Vorrichtung zum Erfassen der Verschalungsumgebung körperlich in einem Gehäuse ein, insbesondere frei programmierbares, Rechenwerk (Maschine oder elektronische Schaltung), beispielsweise in Form eines (Mikro-)Prozessors, (Mikro-)Controllers oder ähnlichem, aufweist. Mittels des Rechenwerks kann die Ermittlung der Winkellage vorgenommen werden. Es ist auch möglich, dass die Vorrichtung zum Erfassen der Verschalungsumgebung Signale oder Daten an ein Rechenwerk übermittelt, das außerhalb eines Gehäuses der Vorrichtung zum Erfassen der Verschalungsumgebung vorhanden ist und nicht zu der Vorrichtung zum Erfassen der Verschalungsumgebung an sich gehört. Das genannte Rechenwerk kann mit der Vorrichtung zum Erfassen der Verschalungsumgebung kabellos oder kabelgebunden verbunden sein. Insoweit ein außerhalb der Vorrichtung zum Erfassen der Verschalungsumgebung vorhandenes Rechenwerk beschrieben ist, so kann das Rechenwerk die Vorrichtung zum Erfassen der Verschalungsumgebung steuern, so dass die Vorrichtung zum Erfassen der Verschalungsumgebung keine eigene Steuereinheit körperlich in einem Gehäuse aufweisen muss.

Der Begriff "Richtung der Erdbeschleunigung" umfasst im Sinne der Beschreibung die Richtung des Erdschwerefelds und fällt zusammen mit im Wesentlichen der Richtung der Fallbeschleunigung bzw. Lotrichtung. Abweichungen, die beispielsweise durch die Corioliskraft bewirkt werden, sind dabei im Rahmen der Toleranz inbegriffen.

Der Begriff "quer" im Sinne der Beschreibung ist eine Richtungsangabe bzw. geometrische Angabe relativ zu einer weiteren Richtung. Der Begriff "quer" umfasst den rechten Winkel, aber auch Abweichungen von diesem. Die Angabe "quer" umfasst einen mit der Bezugsrichtung eingeschlossenen Winkel im Bereich von ungefähr 5° bis 175°, bevorzugt zwischen ungefähr 20° und ungefähr 160°, mehr bevorzugt zwischen ungefähr 35° und ungefähr 145°, insbesondere bevorzugt zwischen ungefähr 50° und ungefähr 130°, ganz besonders bevorzugt zwischen ungefähr 65° und ungefähr 115°, ganz besonders bevorzugt zwischen ungefähr 70° und ungefähr 110°. Ganz besonders bevorzugt umfasst der Begriff "quer" den Einschluss eines Winkels im Bereich von 80° und ungefähr 100°.

Der Begriff "Winkellage" im Sinne der Beschreibung umfasst die Angabe einer Abweichung von der Parallelität zweier Richtungen, Linien, Strahlen bzw. Ebenen, wobei mit der Winkellage ein Winkel angegeben wird, der zwischen den beiden in Bezug genommenen Richtungen, Linien, Strahlen bzw. Ebenen liegt.

Sofern auf die Winkellage eines Elements, insbesondere des Bodenverschalungselements, abgestellt wird, so kann hierunter verstanden werden, dass eine (Außen-)Fläche des Elements eine entsprechende Winkellage aufweist. Soweit eine Parallelität gegenüberliegender Flächen vorliegt, so kann die Winkellage einer Fläche der Winkellage der gegenüberliegenden, parallelen Fläche entsprechen. Insbesondere kann bei dem Bodenverschalungselement auf eine Fläche zur Ermittlung der Winkellage abgestellt werden, die der Großfläche des Betonfertigbauteils zugewandt ist.

Nach der Erfindung umfasst das Verfahren ein Ermitteln oder Einstellen einer Winkellage der Vorrichtung zum Erfassen der Verschalungsumgebung in mindestens einer zweiten Richtung, die zur ersten Richtung unterschiedlich ist, bezogen auf eine Ebene im Wesentlichen quer zur Richtung der Erdbeschleunigung. Ferner umfasst das Verfahren ein Ermitteln einer Winkellage des Bodenverschalungselements in mindestens der zweiten Richtung, wobei mittels der Vorrichtung zum Erfassen der Verschalungsumgebung und des Rechenwerks eine Abweichung der Winkellage des Bodenverschalungselements in der zweiten Richtung von der Ebene im Wesentlichen quer zur Richtung der Erdbeschleunigung festgestellt wird. Hierdurch erfolgt eine Ausrichtung des Bodenverschalungselements in zwei Richtungen, um die Maßhaltigkeit und Genauigkeit des herzustellenden Betonfertigbauteils zu vergrößern.

In einer bevorzugten Ausführungsform umfasst das Verfahren ein Ermitteln einer Soll-Winkellage des Bodenverschalungselements mittels der Vorrichtung zum Erfassen der Verschalungsumgebung und ein Ausgeben einer Bestätigung, wenn die ermittelte Winkellage der Soll-Winkellage entspricht. Hierdurch kann neben einer Feststellung einer Abweichung ein Verfahren geschaffen werden, welches dem Nutzer, der eine Verschalung für ein Betonfertigbauteil erstellt, weiter unterstützt, indem beispielsweise erst dann eine "positive" Bestätigung ausgegeben wird, wenn eine ermittelte Ist-Winkellage einer Soll-Winkellage im Rahmen von Toleranzen entspricht. Beispielsweise kann eine Abweichung von +/- 1°, bevorzugt +/- 0,5° noch zugelassen werden.

Im Sinne der Beschreibung umfasst der Begriff "Bestätigung" eine optische, akustische, mechanische (taktile) Bestätigung, die von dem Nutzer, der eine Verschalung für ein Betonfertigbauteil erstellen soll, wahrgenommen werden kann. Die Bestätigung kann auf mehrere der genannten Arten erfolgen, beispielsweise ist sowohl eine optische als auch eine akustische Bestätigung möglich.

In einer bevorzugten Ausführungsform kann eine Ausgabe der Bestätigung auf einer Anzeigevorrichtung für einen Nutzer erfolgen. Die Bestätigung wird auf einer vom Nutzer tragbaren Anzeigevorrichtung ausgegeben. Beispielsweise kann die Anzeigevorrichtung als brillenartige Anzeigevorrichtung oder als in einer Hand oder mehreren Händen tragbare display- oder monitorartige Anzeigevorrichtung ausgestaltet sein. Auf der Anzeigevorrichtung kann neben der Bestätigung, beispielsweise ausgegeben werden - bevor die Soll-Winkellage erreicht wurde - wie groß und in welcher Richtung die Abweichung vorliegt. Insofern wird nicht nur eine Bestätigung signalisiert, die den Nutzer unterstützt, sondern auch eine Hilfestellung, wie das Bodenverschalungselement zum Erreichen der Soll-Winkellage geneigt bzw. gekippt werden muss. Eine brillenartige Anzeigevorrichtung kann, sofern die Anzeige in das Brillenglas oder ähnliches projiziert wird, eine Wahrnehmung der Umgebung zusätzlich zur angezeigten Information ermöglichen, so dass während der Korrektur eine Auswirkung auf die Soll-Winkellage erfasst werden kann. Zudem kann eine brillenartige Anzeigevorrichtung ermöglichen, dass der Nutzer ohne Beeinträchtigung eines Haltens der Anzeigevorrichtung ist.

In einer bevorzugten Ausführungsform umfasst das Verfahren ein automatisches Ausrichten der Winkellage des Bodenverschalungselements mittels einer Vorrichtung zum Neigen des Bodenverschalungselements in der ersten und/oder zweiten Richtung gemäß einer Soll-Winkellage. Hierdurch kann der Nutzer, der eine Verschalung für ein Betonfertigbauteil erstellen soll, weiter unterstützt werden. Es ist möglich, dass eine Kommunikation zwischen der Vorrichtung zum Neigen des Bodenverschalungselements und der Vorrichtung zum Erfassen der Verschalungsumgebung oder einem mit der Vorrichtung zum Erfassen der Verschalungsumgebung verbundenen Rechenwerk hergestellt werden kann, damit das Verfahren in einem größeren Maße automatisiert werden kann. Eine Halbautomatisierung ist ebenfalls möglich.

Eine Vorrichtung zum Neigen des Bodenverschalungselements kann eine Plattform aufweisen, auf der das Bodenverschalungselement aufgelegt werden kann. Die Plattform kann händisch oder mittels Aktuatoren geneigt bzw. in zwei Richtungen, insbesondere den zuvor genannten beiden Richtungen, gekippt bzw. geneigt werden.

In einer bevorzugten Ausführungsform umfasst das Verfahren ein Protokollieren der ermittelten und/oder eingestellten Winkellage der Vorrichtung zum Erfassen der Verschalungsumgebung und/oder der ermittelten Winkellage des Bodenverschalungselements. Hierdurch kann die Möglichkeit eröffnet werden, die für die Herstellung eines Betonfertigbauteils verwendeten Parameter festzuhalten und/oder als Qualität bzw. Güte speziell für das gefertigte Betonfertigbauteil angeben zu können.

In einer bevorzugten Ausführungsform umfasst das Verfahren ein Anordnen eines Maßes für einen Referenzabstand an dem Bodenverschalungselement in der ersten und/oder in der zweiten Richtung. Hierdurch kann auf dem bzw. an dem Bodenverschalungselement ein vorbestimmter Referenz-Abstand angeordnet werden, der mittels der Vorrichtung zum Erfassen der Verschalung Umgebung erfasst werden kann. In Kenntnis des Referenzabstands kann eine verbesserte Auswertung erfolgen, indem der Vergleich zwischen dem gemessenen Referenzabstand und dem vorbestimmten, bekannten Referenzabstand in die Ermittlung der Winkellage eingehen kann.

In einer bevorzugten Ausführungsform umfasst das Verfahren ein Anordnen einer Vorrichtung zur Ermittlung einer Winkellage an dem Bodenverschalungselement oder in der Nähe des Bodenverschalungselements, wobei die Vorrichtung zur Ermittlung einer Winkellage ausgestaltet ist, die Winkellage des Bodenverschalungselements in der ersten Richtung und/oder in der zweiten Richtung zu ermitteln. Ferner umfasst das Verfahren bevorzugt ein Kommunizieren der mittels der Vorrichtung zur Ermittlung einer Winkellage ermittelten Winkellage an die Vorrichtung zum Erfassen der Verschalungsumgebung bzw. ein mit der Vorrichtung zum Erfassen der Verschalungsumgebung verbundenes Rechenwerk. Durch die Ermittlung einer Winkellage an dem Bodenverschalungselement mittels einer Vorrichtung kann die Genauigkeit erhöht und/oder die Flexibilität, wie die Winkellage des Bodenverschalungselements erfasst werden kann, vergrößert werden. Es können einfache Vorrichtungen verwendet werden.

Sofern beschrieben ist, dass die von der Vorrichtung zur Ermittlung einer Winkellage an dem Bodenverschalungselement festgestellte Winkellage an die Vorrichtung zum Erfassen der Verschalungsumgebung kommuniziert wird, so wird hierunter jedwede Kommunikation verstanden, die insbesondere kabelgebunden oder kabellos erfolgen kann. Es ist eine automatische Kommunikation möglich, bei der es keiner Freigabe oder Weiterleitung durch einen Nutzer bedarf. Es kann auch eine halbautomatische Kommunikation möglich sein, bei der es der Eingabe eines Nutzers, insbesondere in Form einer Freigabe der Weiterleitung der Daten durch den Nutzer, bedarf. Es kann auch vorgesehen sein, dass der Nutzer die Winkellage händisch übermittelt. Mischformen der genannten Kommunikationen sind möglich.

In einer bevorzugten Ausführungsform umfasst das Verfahren ein Einstellen der Winkellage der Vorrichtung zum Erfassen der Verschalungsumgebung in der ersten Richtung im Wesentlichen parallel zu der Ebene im Wesentlichen quer zur Richtung der Erdbeschleunigung. Hierdurch kann ein Referenzpunkt geschaffen werden, mit dem eine absolute Messung der Winkellage des Bodenverschalungselements möglich ist. Die absolute Messung kann dabei direkt in Beziehung zu der Richtung bzw. Anordnung der Vorrichtung zum Erfassen der Verschalungsumgebung gesetzt werden.

In einer bevorzugten Ausführungsform umfasst das Verfahren ein Einstellen der Winkellage der Vorrichtung zum Erfassen der Verschalungsumgebung in der zweiten Richtung im Wesentlichen parallel zu der Ebene im Wesentlichen quer zur Richtung der Erdbeschleunigung. Hierdurch wird eine Referenz in zwei Richtungen für die Vorrichtung zum Erfassen der Verschalung Umgebung vorgegeben. Eine von der Vorrichtung zum Erfassen der Verschalung Umgebung erfasste bzw. an die Vorrichtung zum Erfassen der Verschalungsumgebung kommunizierte Abweichung der Lage des Bodenverschalungselements zur Vorrichtung zum Erfassen der Verschalungsumgebung gibt einen absoluten Wert vor.

In einer bevorzugten Ausführungsform umfasst das Verfahren ein Wählen der ersten und zweiten Richtung, sodass die erste und zweite Richtung einen Winkel von mindestens 10°, bevorzugt mindestens 20°, bevorzugt mindestens 30°, bevorzugt mindestens 40°, bevorzugt mindestens 50°, bevorzugt mindestens 60°, bevorzugt mindestens 70°, bevorzugt mindestens 80°, insbesondere bevorzugt im Wesentlichen 90°, zueinander einschließen. Es ist eine flexible Einstellung der zwei Richtungen bzw. des von den beiden Richtungen eingeschlossenen Winkels möglich. Bei der Verwendung eines rechten Winkels, d. h. 90°, ist eine einfache Ausrichtung möglich.

Die Erfindung schafft auch ein System zur Erstellung einer Verschalung für ein Betonfertigbauteil in einer Verschalungsumgebung mit einem Bodenverschalungselement nach Anspruch 11.

Nach einem nicht beanspruchten Aspekt wird auch eine Verwendung zum Erstellen einer Verschalung für ein Betonfertigbauteil in einer Verschalungsumgebung mit einem Bodenverschalungselement beschrieben. Es wird eine Vorrichtung zum Erfassen der Verschalungsumgebung verwendet und die Vorrichtung zum Erfassen der Verschalungsumgebung stellt eine Abweichung der Winkellage des Bodenverschalungselements in mindestens einer ersten Richtung von der Ebene im Wesentlichen quer zur Richtung der Erdbeschleunigung fest.

Sofern in der Beschreibung ein Verfahren, eine Verwendung und ein System beschrieben werden, so ergänzen die Ausführung der einzelnen Aspekte einander. Insbesondere gelten die Ausführungen zum Verfahren für den Aspekt der Verwendung und den Aspekt des Systems.

Die vorstehenden Ausführungen stellen ebenso wie die nachfolgende Beschreibung beispielhafter Ausführungsformen keinen Verzicht auf bestimmte Ausführungsformen oder Merkmale da.

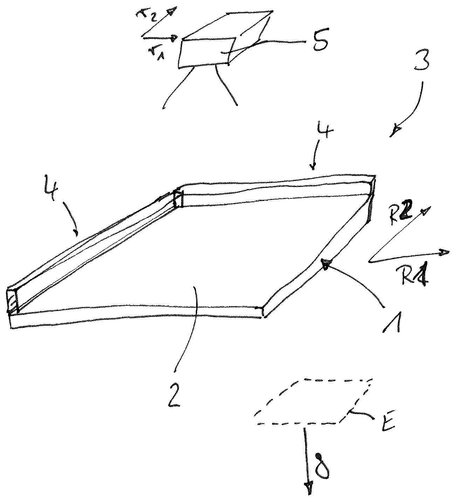

In der Zeichnung zeigt Fig. 1 schematisch in einer isometrischen Darstellung ein System zur Erstellung einer Verschalung für ein Betonfertigbauteil in einer Verschalungsumgebung.

Fig. 1 zeigt ein Bodenverschalungselement 1 mit einer Fläche 2, die der Fläche des zu erstellenden Betonfertigbauteils zugewandt ist. Das Bodenverschalungselement 1 ist in einer Verschalungsumgebung 3 mit weiteren Verschalungselementen 4 angeordnet, wobei die Verschalungselemente 4 eine seitliche Verschalung für das Betonfertigbauteil bilden.

Das System weist eine Vorrichtung 5 zum Erfassen der Verschalungsumgebung 3 auf. Die Vorrichtung 5 ist ausgestaltet, ein Maß zu speichern, das mit einer Winkellage in mindestens einer ersten Richtung r1 der Vorrichtung 5 zum Erfassen der Verschalungsumgebung 3 bezogen auf eine Ebene E im Wesentlichen quer zur Richtung der Erdbeschleunigung g korrespondiert. Im dargestellten Ausführungsbeispiel ist die Vorrichtung 5 zum Erfassen der Verschalungsumgebung 3 in mindestens der ersten Richtung r1 mit seiner Winkellage bezogen auf die Ebene im Wesentlichen quer zur Richtung der Erdbeschleunigung g eingestellt worden, so dass die Winkellage als das gespeicherte Maß bekannt ist und/oder beispielweise 0° beträgt.

Das Bodenverschalungselement 1 bzw. die Fläche 2 des Bodenverschalungselements 1 wird mittels der Vorrichtung 5 zum Erfassen der Verschalungsumgebung 3 optisch abgetastet, um mittels der Vorrichtung 5 zum Erfassen der Verschalungsumgebung 3 eine Abweichung der Winkellage des Bodenverschalungselements 1 in mindestens einer ersten Richtung R1 von der Ebene E im Wesentlichen quer zur Richtung der Erdbeschleunigung g festzustellen, wobei die Richtungen r1 und R1 im dargestellten Ausführungsbeispiel gleich sind bzw. parallel zueinander verlaufen. So kann die Winkellage des Bodenverschalungselements 1 in mindestens der ersten Richtung R1 bezogen auf die Ebene E quer zur Richtung der Erdbeschleunigung g festgestellt werden.

Die Vorrichtung 5 zum Erfassen der Verschalungsumgebung 3 wird in der dargestellten Ausführungsform in Bezug auf eine Winkellage in mindestens einer zweiten, zur ersten Richtung r1 unterschiedlichen Richtung r2 der Vorrichtung 5 zum Erfassen der Verschalungsumgebung 3 bezogen auf die Ebene E im Wesentlichen quer zur Richtung der Erdbeschleunigung g eingestellt oder bestimmt.

Es wird die Winkellage des Bodenverschalungselements 1 in mindestens der zweiten Richtung R2 mittels der Vorrichtung 5 zum Erfassen der Verschalungsumgebung 3 ermittelt, wobei im dargestellten Ausführungsbeispiel die Richtungen R2 und r2 parallel zueinander sind bzw. sich entsprechen.

## Patentansprüche

1. Verfahren zum Erstellen einer Verschalung für ein Betonfertigbauteil in einer Verschalungsumgebung (3) mit einem Bodenverschalungselement (1), bei dem eine Vorrichtung (5) zum Erfassen der Verschalungsumgebung (3) verwendet wird, die mindestens einen Sensor aufweist, mit dem die Verschalungsumgebung optisch erfasst wird, wobei das Verfahren umfasst:
Ermitteln oder Einstellen einer Winkellage in mindestens einer ersten Richtung (r1, R1) der Vorrichtung (5) zum Erfassen der Verschalungsumgebung (3) bezogen auf eine Ebene (E) im Wesentlichen quer zur Richtung der Erdbeschleunigung (g); Ermitteln einer Winkellage des Bodenverschalungselements (1) in mindestens der ersten Richtung (r1, R1), wobei mittels der Vorrichtung (5) zum Erfassen der Verschalungsumgebung (3) und eines Rechenwerks eine Abweichung der Winkellage des Bodenverschalungselements (1) in mindestens der ersten Richtung (r1, R1) von der Ebene (E) im Wesentlichen quer zur Richtung der Erdbeschleunigung (g) festgestellt wird;
Ermitteln oder Einstellen einer Winkellage in mindestens einer zweiten zur ersten Richtung unterschiedlichen Richtung (r2, R2) der Vorrichtung (5) zum Erfassen der Verschalungsumgebung (3) bezogen auf eine Ebene (E) im Wesentlichen quer zur Richtung der Erdbeschleunigung (g) und
Ermitteln einer Winkellage des Bodenverschalungselements (1) in mindestens der zweiten Richtung (r2, R2), wobei mittels der Vorrichtung (5) zum Erfassen der Verschalungsumgebung (3) und des Rechenwerks eine Abweichung der Winkellage des Bodenverschalungselements (1) in der zweiten Richtung (r2, R2) von der Ebene (E) im Wesentlichen quer zur Richtung der Erdbeschleunigung (g) festgestellt wird.

2. Verfahren nach Anspruch 1, umfassend:
Ermitteln einer Soll-Winkellage des Bodenverschalungselements (1) mittels der Vorrichtung (5) zum Erfassen der Verschalungsumgebung (3) und Ausgeben einer Bestätigung, wenn die ermittelte Winkellage der Soll-Winkellage entspricht.

3. Verfahren nach Anspruch 2, umfassen:
Ausgeben der Bestätigung auf einer Anzeigevorrichtung für einen Nutzer, wobei die Bestätigung auf einer vom Nutzer tragbaren Anzeigevorrichtung ausgegeben wird.

4. Verfahren nach einem der Ansprüche 1 bis 3, umfassend:
Automatisches Ausrichten der Winkellage des Bodenverschalungselements (1) mittels einer Vorrichtung zum Neigen des Bodenverschalungselements (1) in der ersten und/oder zweiten Richtung gemäß einer Soll-Winkellage.

5. Verfahren nach einem der Ansprüche 1 bis 4, umfassend:
Protokollieren der ermittelten und/oder eingestellten Winkellage der Vorrichtung (5) zum Erfassen der Verschalungsumgebung (3) und/oder der ermittelten Winkellage des Bodenverschalungselements (1).

6. Verfahren nach einem der Ansprüche 1 bis 5, umfassend:
Anordnen eines Maßes für einen Referenzabstand an dem Bodenverschalungselement (1) in der ersten und/oder zweiten Richtung (r1, R1; r2, R2).

7. Verfahren nach einem der Ansprüche 1 bis 6, umfassend:
Anordnen einer Vorrichtung zur Ermittlung einer Winkellage an dem Bodenverschalungselement (1) oder in der Nähe des Bodenverschalungselements (1), wobei die Vorrichtung zur Ermittlung einer Winkellage ausgestaltet ist, die Winkellage des Bodenverschalungselements (1) in der ersten Richtung (r1, R1) und/oder in der zweiten Richtung (r2, R2) zu ermitteln und
Kommunizieren der mittels der Vorrichtung zur Ermittlung einer Winkellage ermittelten Winkellage an die Vorrichtung (5) zum Erfassen der Verschalungsumgebung (3).

8. Verfahren nach einem der Ansprüche 1 bis 7, umfassend:
Einstellen der Winkellage der Vorrichtung (5) zum Erfassen der Verschalungsumgebung (3) in der ersten Richtung (r1, R1) parallel zu der Ebene (E) im Wesentlichen quer zur Richtung der Erdbeschleunigung (g).

9. Verfahren nach einem der Ansprüche 1 bis 8, umfassend:
Einstellen der Winkellage der Vorrichtung (5) zum Erfassen der Verschalungsumgebung (3) in der zweiten Richtung (r2, R2) parallel zu der Ebene (E) im Wesentlichen quer zur Richtung der Erdbeschleunigung (g).

10. Verfahren nach einem der Ansprüche 1 bis 9, umfassend:
Wählen der ersten und zweiten Richtung (r1, R1; r2, R2), so dass die erste und zweite Richtung (r1, R1; r2, R2) einen Winkel von mindestens 10°, insbesondere 90°, zueinander einschließen.

11. System zur Erstellung einer Verschalung für ein Betonfertigbauteil in einer Verschalungsumgebung (3) mit einem Bodenverschalungselement (1), wobei das System insbesondere zum Durchführen des Verfahrens nach einem der Ansprüche 1 bis 11 ausgestaltet ist, und das System umfasst:
eine Vorrichtung (5) zum Erfassen der Verschalungsumgebung (3), die mindestens einen Sensor aufweist, mit dem die Verschalungsumgebung optisch erfasst wird, wobei die Vorrichtung (5) ausgestaltet ist, ein Maß zu speichern, das mit einer Winkellage in mindestens einer ersten Richtung (r1, R1) der Vorrichtung (5) zum Erfassen der Verschalungsumgebung (3) bezogen auf eine Ebene (E) im Wesentlichen quer zur Richtung der Erdbeschleunigung (g) korrespondiert und
die Vorrichtung (5) zum Erfassen der Verschalungsumgebung (3) weiter ausgestaltet ist, eine Abweichung der Winkellage des Bodenverschalungselements (1) mittels eines Rechenwerks in mindestens der ersten Richtung (r1, R1) von der Ebene (E) im Wesentlichen quer zur Richtung der Erdbeschleunigung (g) festzustellen; und die Vorrichtung (5) weiter ausgestaltet ist, ein Maß zu speichern, das mit einer Winkellage in mindestens einer zweiten zur ersten Richtung (r1, R1) unterschiedlichen Richtung (r2, R2) der Vorrichtung (5) zum Erfassen der Verschalungsumgebung (3) bezogen auf eine Ebene (E) im Wesentlichen quer zur Richtung der Erdbeschleunigung (g) korrespondiert und
die Vorrichtung (5) zum Erfassen der Verschalungsumgebung (3) weiter ausgestaltet ist, eine Abweichung der Winkellage des Bodenverschalungselements (1) mittels des Rechenwerks in mindestens der zweiten Richtung (r2, R2) von der Ebene (E) im Wesentlichen quer zur Richtung der Erdbeschleunigung (g) festzustellen.

## Claims

1. Method for creating a formwork for a precast concrete component in a formwork environment (3) having a ground formwork element (1), wherein a device (5) for detecting the formwork environment (3) is used, which has at least one sensor with which the formwork environment is optically detected, wherein the method comprises:
determining or adjusting an angular position in at least one first direction (r1, R1) of the device (5) for detecting the formwork environment (3) with respect to a plane (E) substantially transverse to the direction of the gravity acceleration (g);
determining an angular position of the ground formwork element (1) in at least the first direction (r1, R1), wherein a deviation of the angular position of the ground formwork element (1) in at least the first direction (r1, R1) from the plane (E) substantially transverse to the direction of the gravity acceleration (g) is established by means of the device (5) for detecting the formwork environment (3) and a calculating device;
determining or adjusting an angular position in at least one second direction (r2, R2), different from the first direction, of the device (5) for detecting the formwork environment (3) with respect to a plane (E) substantially transverse to the direction of the gravity acceleration (g) and
determining an angular position of the ground formwork element (1) in at least the second direction (r2, R2), wherein a deviation of the angular position of the ground formwork element (1) in the second direction (r2, R2) from the plane (E) substantially transverse to the direction of the gravity acceleration (g) is established by means of the device (5) for detecting the formwork environment (3) and the calculating device.

2. Method according to claim 1, comprising:
determining a target angular position of the ground formwork element (1) by means of the device (5) for detecting the formwork environment (3) and outputting a confirmation if the determined angular position corresponds to the target angular position.

3. Method according to claim 2, comprising:
outputting the confirmation on a display device for a user, wherein the confirmation is output on a display device wearable by the user.

4. Method according to one of claims 1 to 3, comprising:
automatically aligning the angular position of the ground formwork element (1) by means of a device for tilting the ground formwork element (1) in the first and/or second direction according to a target angular position.

5. Method according to one of claims 1 to 4, comprising:
logging the determined and/or set angular position of the device (5) for detecting the formwork environment (3) and/or the determined angular position of the ground formwork element (1).

6. Method according to one of claims 1 to 5, comprising:
arranging a measurement for a reference distance on the ground formwork element (1) in the first and/or second direction (r1, R1; r2, R2).

7. Method according to one of claims 1 to 6, comprising:
arranging a device for determining an angular position on the ground formwork element (1) or in the vicinity of the ground formwork element (1), wherein the device for determining an angular position is configured to determine the angular position of the ground formwork element (1) in the first direction (r1, R1) and/or in the second direction (r2, R2) and
communicating the angular position determined by means of the device for determining an angular position to the device (5) for detecting the formwork environment (3).

8. Method according to one of claims 1 to 7, comprising:
adjusting the angular position of the device (5) for detecting the formwork environment (3) in the first direction (r1, R1) parallel to the plane (E) substantially transverse to the direction of the gravity acceleration (g).

9. Method according to one of claims 1 to 8, comprising:
adjusting the angular position of the device (5) for detecting the formwork environment (3) in the second direction (r2, R2) parallel to the plane (E) substantially transverse to the direction of the gravity acceleration (g).

10. Method according to one of claims 1 to 9, comprising:
selecting the first and second directions (r1, R1; r2, R2), such that the first and second directions (r1, R1; r2, R2) include an angle of at least 10°, in particular 90°, with respect to one another.

11. System for creating a formwork for a precast concrete component in a formwork environment (3) having a ground formwork element (1), wherein the system is designed in particular for carrying out the method according to one of claims 1 to 11, and the system comprises:
a device (5) for detecting the formwork environment (3), which has at least one sensor with which the formwork environment is optically detected,
wherein the device (5) is configured to store a measurement that corresponds to an angular position in at least one first direction (r1, R1) of the device (5) for detecting the formwork environment (3) with respect to a plane (E) substantially transverse to the direction of the gravity acceleration (g) and
the device (5) for detecting the formwork environment (3) is further configured to establish a deviation of the angular position of the ground formwork element (1) from the plane (E) substantially transverse to the direction of the gravity acceleration (g) by means of a calculating device in at least the first direction (r1, R1); and the device (5) is further configured to store a measurement that corresponds to an angular position in at least one second direction (r2, R2), different from the first direction (r1, R1), of the device (5) for detecting the formwork environment (3) with respect to a plane (E) substantially transverse to the direction of the gravity acceleration (g) and the device (5) for detecting the formwork environment (3) is further configured to establish a deviation of the angular position of the ground formwork element (1) in at least the second direction (r2, R2) from the plane (E) substantially transverse to the direction of the gravity acceleration (g) by means of the calculating device.

## Revendications

1. Procédé de construction d'un coffrage pour un composant fini en béton dans un environnement de coffrage (3) avec un élément de coffrage de sol (1), dans lequel est utilisé un dispositif (5) de détection de l'environnement de coffrage (3), qui présente au moins un capteur avec lequel l'environnement de coffrage est détecté optiquement, le procédé comprenant :
la détermination ou le réglage d'une position angulaire dans au moins une première direction (r1, R1) du dispositif (5) de détection de l'environnement de coffrage (3) par rapport à un plan (E) essentiellement transversal à la direction de l'accélération de la pesanteur (g) ;
la détermination d'une position angulaire de l'élément de coffrage de sol (1) dans au moins la première direction (r1, R1), un écart de la position angulaire de l'élément de coffrage de sol (1) dans au moins la première direction (r1, R1) par rapport au plan (E) étant déterminé essentiellement transversalement à la direction de l'accélération de la pesanteur (g) au moyen du dispositif (5) de détection de l'environnement de coffrage (3) et d'un calculateur ;
la détermination ou le réglage d'une position angulaire dans au moins une deuxième direction (r2, R2) différente de la première direction du dispositif (5) de détection de l'environnement de coffrage (3) par rapport à un plan (E) essentiellement transversal à la direction de l'accélération de la pesanteur (g) et
la détermination d'une position angulaire de l'élément de coffrage de sol (1) dans au moins la deuxième direction (r2, R2), un écart de la position angulaire de l'élément de coffrage de sol (1) dans la deuxième direction (r2, R2) par rapport au plan (E) étant déterminé essentiellement transversalement à la direction de l'accélération de la pesanteur (g) au moyen du dispositif (5) de détection de l'environnement de coffrage (3) et du calculateur.

2. Procédé selon la revendication 1, comprenant :
la détermination d'une position angulaire de consigne de l'élément de coffrage de sol (1) au moyen du dispositif (5) de détection de l'environnement de coffrage (3) et l'émission d'une confirmation lorsque la position angulaire déterminée correspond à la position angulaire de consigne.

3. Procédé selon la revendication 2, comprenant :
l'émission de la confirmation sur un dispositif d'affichage pour un utilisateur, la confirmation étant émise sur un dispositif d'affichage portable par l'utilisateur.

4. Procédé selon l'une des revendications 1 à 3, comprenant :
l'alignement automatique de la position angulaire de l'élément de coffrage de sol (1) au moyen d'un dispositif d'inclinaison de l'élément de coffrage de sol (1) dans la première et/ou la deuxième direction selon une position angulaire de consigne.

5. Procédé selon l'une des revendications 1 à 4, comprenant :
l'enregistrement de la position angulaire déterminée et/ou réglée du dispositif (5) de détection de l'environnement de coffrage (3) et/ou la position angulaire déterminée de l'élément de coffrage de sol (1).

6. Procédé selon l'une des revendications 1 à 5, comprenant :
le classement d'une mesure pour une distance de référence sur l'élément de coffrage de sol (1) dans la première et/ou la deuxième direction (r1, R1 ; r2, R2).

7. Procédé selon l'une des revendications 1 à 6, comprenant :
le classement d'un dispositif de détermination d'une position angulaire sur l'élément de coffrage de sol (1) ou à proximité de l'élément de coffrage de sol (1), le dispositif de détermination d'une position angulaire étant conçu pour déterminer la position angulaire de l'élément de coffrage de sol (1) dans la première direction (r1, R1) et/ou dans la deuxième direction (r2, R2) et
la communication de la position angulaire déterminée au moyen du dispositif de détermination d'une position angulaire au dispositif (5) de détection de l'environnement de coffrage (3).

8. Procédé selon l'une des revendications 1 à 7, comprenant :
le réglage de la position angulaire du dispositif (5) de détection de l'environnement de coffrage (3) dans la première direction (r1, R1) parallèle au plan (E) essentiellement transversal à la direction de l'accélération de la pesanteur (g).

9. Procédé selon l'une des revendications 1 à 8, comprenant :
le réglage de la position angulaire du dispositif (5) de détection de l'environnement de coffrage (3) dans la deuxième direction (r2, R2) parallèle au plan (E) essentiellement transversal à la direction de l'accélération de la pesanteur (g).

10. Procédé selon l'une des revendications 1 à 9, comprenant :
la sélection des première et deuxième directions (r1, R1 ; r2, R2) de sorte que les première et deuxième directions (r1, R1 ; r2, R2) forment un angle d'au moins 10°, en particulier de 90°, l'une par rapport à l'autre.

11. Système de construction d'un coffrage pour un composant fini en béton dans un environnement de coffrage (3) comprenant un élément de coffrage de sol (1), le système étant notamment configuré pour mettre en œuvre le procédé selon l'une des revendications 1 à 11, le système comprenant :
un dispositif (5) de détection de l'environnement de coffrage (3), qui présente au moins un capteur avec lequel l'environnement de coffrage est détecté optiquement,
le dispositif (5) étant conçu pour enregistrer une mesure qui correspond à une position angulaire dans au moins une première direction (r1, R1) du dispositif (5) de détection de l'environnement de coffrage (3) par rapport à un plan (E) essentiellement transversal à la direction de l'accélération de la pesanteur (g), et
le dispositif (5) de détection de l'environnement de coffrage (3) étant en outre conçu pour déterminer un écart de la position angulaire de l'élément de coffrage de sol (1) au moyen d'un calculateur dans au moins la première direction (r1, R1) par rapport au plan (E), essentiellement transversal à la direction de l'accélération de la pesanteur (g) ; et le dispositif (5) étant en outre conçu pour enregistrer une mesure qui correspond à une position angulaire dans au moins une deuxième direction (r2, R2) différente de la première direction (r1, R1) du dispositif (5) de détection de l'environnement de coffrage (3) par rapport à un plan (E) essentiellement transversal à la direction de l'accélération de la pesanteur (g) et le dispositif (5) de détection de l'environnement de coffrage (3) étant en outre conçu pour déterminer un écart de la position angulaire de l'élément de coffrage de sol (1) au moyen du calculateur dans au moins la deuxième direction (r2, R2) par rapport au plan (E) essentiellement transversal à la direction de l'accélération de la pesanteur (g).
